# EUROPÄISCHE PATENTSCHRIFT

(11) **EP 1 040 333 B1**
(45) Veröffentlichungstag und Bekanntmachung des Hinweises auf die Patenterteilung: **03.07.2002**
(21) Anmeldenummer: 98956751.6
(22) Anmeldetag: 04.12.1998
(51) Int. Cl.: G01L 9/00, G01L 7/08

(54) **MEMBRANE FÜR EINE KAPAZITIVE VAKUUMMESSZELLE**
MEMBRANE FOR A CAPACITIVE VACUUM MEASURING CELL
MEMBRANE POUR CELLULE DE MESURE SOUS VIDE A CAPACITE

(30) Priorität: 23.12.1997 CH 295497
(43) Veröffentlichungstag der Anmeldung: 04.10.2000
(73) Patentinhaber: Unaxis Balzers Aktiengesellschaft, 9496 Balzers (LI)
(72) Erfinder: BJÖRKMAN, Per, FIN-22310 Palsböle (FI)
(86) Internationale Anmeldenummer: CH9800516
(87) Internationale Veröffentlichungsnummer: WO9934185

(56) Entgegenhaltungen:
- EP-A- 0 009 313
- EP-A- 0 649 008
- GB-A- 2 071 853
- US-A- 5 436 795

## Beschreibung

Die Erfindung bezieht sich auf eine Membrane für eine kapazitive Vakuummesszelle gemäss Oberbegriff des Patentanspruches 1.

Es ist bekannt, Drücke bzw. Druckdifferenzen dadurch zu messen, indem eine dünne Membran druckbeaufschlagt wird und ihre Durchbiegung gemessen wird. Eine bekannte und geeignete Methode, die Durchbiegung solcher Membranen zu messen besteht darin, dass die Membrananordnung als variable elektrische Kapazität ausgebildet wird, wobei über eine Messelektronik in bekannter Weise die Kapazitätsänderung ausgewertet wird, welche mit der Druckänderung korreliert. Die Kapazität wird ausgebildet, indem die dünne, biegsame Membranfläche in geringem Abstand gegenüber einer weiteren Fläche angeordnet ist und beide einander gegenüberliegenden Oberflächen mit einem elektrisch leitenden Belag beschichtet oder aus elektrisch leitfähigem Material sind. Bei Druckbeaufschlagung der Membran verändert sich durch die Durchbiegung der Abstand zwischen den beiden Elektroden, was zu einer auswertbaren Kapazitätsänderung der Anordnung führt. Sensoren dieser Art werden in grossen Stückzahlen aus Silizium hergestellt. Sowohl der flächige Grundkörper wie auch die Membran bestehen hierbei oft vollständig aus Silizium-Material. Es gibt auch Ausführungen mit kombinierter Materialzusammensetzung z.B. Silizium mit Glasunterlage. Die Sensoren lassen sich dadurch kostengünstig herstellen. Für Vakuumanwendungen sind Drucksensoren dieser Art in der Regel nur für höhere Druckbereiche im Bereich von ca. 10⁻¹ mbar bis einige bar einsetzbar. Hohe Auflösung bei tieferen Drücken ab etwa 10⁻¹ mbar sind mit dem Werkstoff Silizium nicht mehr realisierbar. Unter anderem rührt dies daher, dass das Silizium an der Oberfläche mit der Umgebung reagiert und so die empfindliche Sensorcharakteristik gestört wird. Bereits Wasserdampf, der in normaler atmosphärischer Luft enthalten ist, führt zu entsprechenden Reaktionen an den Oberflächen. Das Problem wird zusätzlich verschärft, wenn der Sensor in chemisch aggressiven Atmosphären eingesetzt wird. Es wurde deshalb versucht, solche Silizium-Sensoren durch Passivieren der Oberflächen gegenüber aggressiven Ausseneinflüssen zu schützen. Es wurde auch versucht, die Oberfläche mit Schutzüberzügen zu versehen, damit die Haltbarkeit und Resistenz gegenüber der chemisch aggressiven Umgebung erhöht wird, wie dies in DE 41 36 987 beschrieben ist. Solche Massnahmen sind kostenaufwendig und führen bei mechanisch deformierbaren Teilen, wie Membranen, nur bedingt zum Erfolg, insbesondere bei besonders aggressiven Medien, wie Fluor, Bromsäure und deren Verbindungen, wie sie bei Vakuumätzverfahren eingesetzt werden.

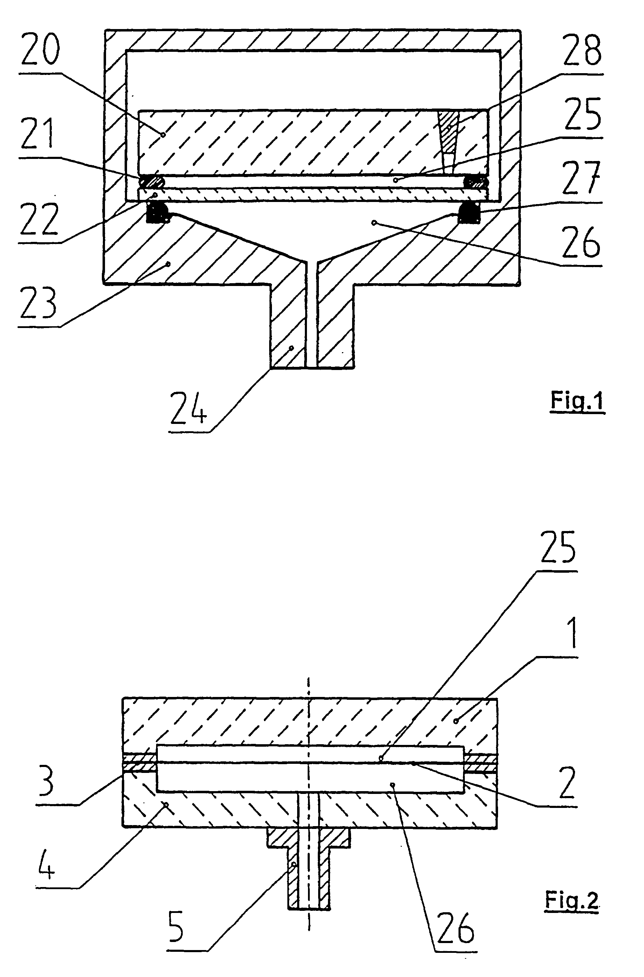

Es wurde deshalb versucht, Druckmesszellen für Vakuumanwendungen vollständig aus korrosionsfesten Materialien wie Al₂O₃ herzustellen. Eine bekannte Anordnung dieser Art ist in Fig. 1 dargestellt. Die Messzelle besteht aus einer Keramikplatte (20), über deren Fläche in geringem Abstand eine Membran (22) angeordnet ist, welche gegenüber der Keramikplatte (20) im Randbereich mit einer Schmelzdichtung (21) dichtend verbunden ist. Die Keramikplatte (20) bildet so zusammen mit der Membran (22) einen Referenzvakuumraum (25) aus, der über eine Pumpöffnung bei der Herstellung evakuiert worden ist und mit einer Dichtung (28) abgedichtet ist. Die im Referenzvakuumraum (25) sich gegenüber liegenden Oberflächen der Keramikplatte (20) und der Membran (22) sind elektrisch leitend beschichtet und mit isolierten Anschlüssen nach aussen geführt, um das Kapazitätssignal mit einer Elektonik auszuwerten (in der Figur nicht dargestellt). Die Platte (20) und die Membran (22) sind beide, um Korrosionsbeständigkeit zu erreichen, aus Keramik-Material, wie Al₂O₃ gefertigt. Diese Messzelle ist wiederum in einem vakuumdichten Gehäuse (23) angeordnet, welches mit einem Messzellenanschluss (24) versehen ist, welche mit den zu messenden Medien verbunden werden. Der sich ausbildende Messvakuumraum (26) ist über den Messzellenanschluss (24) gegenüber der Membran (22) mit einer Elastomerdichtung (27) dichtend verbunden, so dass die zu messenden Drücke nur die Membranoberfläche (22) beaufschlagen. Zum Zweck der Abdichtung wird die ganze Zelle über die Keramikplatte (20) und die Membran (22) gegen die Elastomerdichtung (27) gedrückt. Messzellen dieser Art sind bis anhin nur für höhere Drücke im Bereich von 0,1 mbar bis 100 bar einsetzbar. Diese Bauweise führt ausserdem zu Verspannungen in den Materialien, was im tiefen Druckbereich, beispielsweise < 1 mbar die Reproduzierbarkeit der Messergebnisse und die Auflösung wesentlich beeinträchtigt. Die bisher verwendeten Keramikmembranen (22) weisen eine Dicke auf im Bereich von 279µm bis 2540µm. Solche Konstruktionen ermöglichen es nicht, grosse Messbereiche insbesondere bis zu tiefen Drücken von 0,1 mbar bis 10⁻⁶ mbar zu realisieren, ausserdem sind Konstruktionen dieser Art, wie sie auch in der US 5,553,502 offenbart sind, kostenaufwendig.

Die vorliegende Erfindung hat es sich zur Aufgabe gemacht, die Nachteile des Standes der Technik zu beseitigen. Insbesondere stellt sich die vorliegende Erfindung die Aufgabe, eine einfach und kostengünstig herstellbare Membrane aus Al₂O₃ für eine Vakuummesszelle zu realisieren, welche es erlaubt, Drücke im Bereich von 10⁻⁶ mbar bis 1000 mbar, insbesondere von 10⁻⁶ mbar bis 1 mbar mit Genauigkeiten von besser 1%, vorzugsweise besser 0,3% vom Messwert zu messen. Der Messbereich kann hierbei durch mehrere erfindungsgemässe Zellen- bzw. Membranausführungen abgedeckt werden. Zudem soll die Membrane gegen aggressive Medien korrosionsbeständig sein.

Die Aufgabe wird bei der gattungsgemässen Membrane gemäss den kennzeichnenden Merkmalen des Patentanspruches 1 gelöst. Die abhängigen Patentansprüche beziehen sich auf vorteilhafte weitere Ausgestaltungen der Erfindung.

Die erfindungsgemässe Membrane ist vollständig aus einer Keramik, wie insbesondere Al₂O₃ hergestellt. Dadurch wird sehr hohe Korrosionsbeständigkeit und langlebige Reproduzierbarkeit erreicht. Ein Messzellenaufbau kann somit vollständig aus korrosionsbeständigen Materialien, insbesondere aus Keramik hergestellt werden. Nur in Bereichen, wo gedichtet werden muss oder wo Durchführungen vorgesehen sind, werden in geringen Mengen andere Materialien als Al₂O₃ vorgesehen, sofern nicht das Al₂O₃ ohne Fremdmaterialzugabe verschweisst wird. Eine Zelle besteht aus einem ersten plattenförmigen Gehäusekörper, über welchem eine Membran im Randbereich dichtend angeordnet ist, so dass diese einen Referenzvakuumraum einschliesst. Auf der dem Referenzvakuumraum abgewandten Seite ist ein zweiter Gehäusekörper ebenfalls im Randbereich dichtend schliessend beabstandet angeordnet, so dass dort ein Messvakuumraum ausgebildet wird. Dieser Messvakuumraum ist mit einem Anschluss für die Zuleitung des zu messenden Mediums versehen. Die Oberflächen des ersten Gehäusekörpers und der Membrane, welche den Referenzvakuumraum ausbilden, sind elektrisch leitend beschichtet, beispielsweise mit Gold, und bilden die Elektroden der Kapazitätsmesszelle. Die Elektroden wiederum sind herausgeführt, beispielsweise durch den ersten Gehäusekörper oder durch den Abdichtungsbereich in der Randzone. Die im wesentlichen parallel angeordneten Elektrodenflächen weisen einen Abstand im Bereich von 2µm bis 50µm auf. Die Abdichtung der Membran im Randbereich gegenüber den beiden Gehäusen erfolgt vorzugsweise durch Verschweissung, beispielsweise durch Laserschweissen. Sehr geeignet und einfach in der Anwendung ist aber auch ein Glaslot, welches ebenfalls korrosionsbeständig ist. Eine weitere Möglichkeit der dichtenden Verbindung besteht auch darin, Gehäuseteile diffusiv zu verbinden, beispielsweise im Grünkörperstadium, wenn es darum geht, Al₂O₃-fremdes Material vollständig zu vermeiden.

Die erfindungsgemässe Membrane in der vorerwähnten Messzellenanordnung ermöglicht im Wesentlichen einen symmetrischen Aufbau, der jegliche Verspannungen im Gehäuse vermeidet. Dies ist besonders wichtig, um eine hohe Messempfindlichkeit zu erreichen und tiefe Messdrücke bei hoher Genauigkeit und Reproduzierbarkeit zu realisieren. Dadurch wird ausserdem ermöglicht, die erfindungsgemäss sehr dünne Membran aus Keramik zu verwenden, welche zwingend isc, wenn die Messzelle tiefere Vakuumdrücke als 100 mbar, und vor allem tiefer als 10 mbar, zuverlässig mit kapazitiven vollkeramischen Messzellen erfassen soll. Hierzu sind Membrandicken von 10µm bis 250µm notwendig, wobei Membrandicken von 10µm bis 120µm bevorzugt werden, um eine sehr gute Auflösung zu erreichen. Typische Membrandickenbereiche sind beispielsweise:
- bei 1000 Torr Membrandicke 760µm ± 10µm
- bei 100 Torr Membrandicke 345µm ± 10µm
- bei 10 Torr Membrandicke 150µm ± 10µm
- bei 1 Torr Membrandicke 100µm ± 10µm
- bei 0,1 Torr Membrandicke 60µm ± 10µm
- bei 0,01 Torr Membrandicke 40µm ± 10µm

Solch dünne Membranen sind besonders schwierig herzustellen und benötigen nach dem Sinterschritt mindestens einen weiteren Glättungsschritt. Es ist ausserdem besonders wichtig, dass die Membran genügend Heliumdichtheit aufweist, was nur erreicht werden kann, wenn die Korngrössen des Membranmaterials nicht zu gross sind und sich im Bereich von < 20µm bewegen. Kleinere Korngrössen von < 10µm werden bevorzugt, insbesondere solche die < 5µm sind. In jedem Fall müssen im Querschnitt der Membran über die Dicke betrachtet mindestens zwei Körner vorhanden sein, bei mehr als fünf Körnern übereinander sind die Membranen besonders dicht.

Ein weiteres wichtiges Kriterium für die erreichbare Genauigkeit der Messzelle ist die Planität der Membranfläche. Die Unebenheit über die gesamte Fläche sollte in jedem Fall nicht mehr als 30 % des Elektrodenabstandes betragen, wobei es besser ist, wenn sie nicht mehr als 15 % beträgt. Dies bedeutet, dass die Unebenheit über die gesamte Fläche nicht grösser als 10µm sein sollte, vorzugsweise nicht mehr als 5µm. Die Unebenheit ist hierbei definiert als die Differenz vom tiefsten zum höchsten Punkt. Die Reinheit des verwendeten Aluminiumoxides der Membrane sollte, um entsprechend gute Langzeitstabilität zu erreichen, mindestens 94 % betragen, wobei bevorzugte Werte über 99 % liegen.

Um die Qualität der im Randbereich liegenden Membrandichtung nicht zu beeinflussen, ist es vorteilhaft, wenn die elektrisch leitenden Schichten über Durchführungen, welche am ersten Gehäusekörper angeordnet sind, herausgeführt werden, und nicht direkt über die Membrandichtung bzw. -verschweissung.

Der Referenzvakuumraum muss ein langzeitstabiles Vakuum hoher Qualität aufweisen, um die präzise Funktion der Messzelle über lange Zeit gewährleisten zu können. Dazu ist nach dem Abpumpen ein Getter vorzusehen, welcher vorzugsweise in einem kleinen Volumen am ersten Gehäuse angeordnet ist und in Verbindung mit dem Referenzvakuumraum steht. Dieser Getter sorgt dafür, dass der Referenzvakuumdruck tiefer liegt als der zu messende Druck, vorzugsweise aber um mindestens eine Dekade tiefer. Um Verunreinigungen des Innenbereiches der Messzelle zu vermeiden, sollte ein Gettertyp gewählt werden, der nicht verdampfend ist.

Messzellen mit einer erfindungsgemässen Membrane können sehr kompakt und kostengünstig aufgebaut werden. Der Durchmesser einer solchen Zelle kann im Bereich von 5 bis 80 mm liegen, wobei bevorzugterweise die Messzelle einen Durchmesser von 5 bis 40 mm aufweist. Die Dicke einer solchen Zelle liegt hierbei vorzugsweise im Bereich von 2 mm bis 25 mm.

Zur Herstellung einer funktionsfähigen Messzelle mit den vorerwähnten Eigenschaften ist die Einhaltung des entsprechenden Herstellverfahrens sehr wichtig. Insbesondere die Herstellung der dünnen Keramikmembrane fordert besondere Massnahmen. Sowohl die Membrane wie der ganze Aufbau der Messzelle muss besonders eigenspannungsfrei erfolgen.

Erfindungsgemässe Membranen aus Al₂O₃ werden dadurch hergestellt, dass, wie im Keramikbereich üblich, zuerst ein Schlikker nach einem bestimmten Rezept gemischt wird und die teigförmige Masse danach auf ein bandförmiges Trägermaterial, beispielsweise eine Kunststofffolie, dünn und gleichmässig aufgebracht wird. Nach dem Trocknen werden diese Folien auf Fehlstellen geprüft, wie Blasen oder Löcher. Die nun vorliegende Masse, welche noch nicht gesintert und somit noch flexibel ist, wird als Grünkörper bezeichnet. Die gewünschte Membranform, vorzugsweise kreisrund, wird nun aus dem bandförmigen Grünkörpermaterial herausgeschnitten, wobei dieses hierbei noch an der Folie haftet. Geschnitten wird beispielsweise mit Messern, vorzugsweise mit einem Laser. Das Ausschneiden bzw. Ritzen des Grünkörpers muss besonders vorsichtig erfolgen, so dass gegen die Fläche der zukünftigen Keramikmembran an der Schneidkante keine Verwerfungen bzw. Erhebungen das Mass der Welligkeit der Membran mitbestimmend entstehen. Wenn mit dem Messer geschnitten wird, kann hierfür beispielsweise gleichzeitig mit dem Schneidvorgang membranseitig ein Anpressrädchen mitgeführt werden, welches ein zu starkes Aufwerfen des Grünkörpers verhindert. Anschliessend erfolgt ein sorgfältiges Trennen der vorzugsweise in Kreisform ausgeschnittenen Membran von der Folie, indem diese beispielsweise über eine Kante abgezogen wird. Die Membranen werden anschliessend in einem Ofen gesintert. Für die Sinterung werden die Membranen vorzugsweise auf hartgebrannte, plane Al₂O₃-Platten gelegt und beispielsweise übereinander beabstandet gestapelt und bei typischerweise 1630°C gesintert. Die Temperatur wird während etwa 400 Minuten auf diese 1630°C hochgefahren, also etwa mit 4°C Temperaturanstieg pro Minute, dann einige Minuten, beispielsweise 6 Minuten, auf dieser Temperatur belassen und danach in einem ersten Schritt mit langsamer Temperaturerniedrigung von 3°C pro Minute während etwa 210 Minuten auf 1000°C abgesenkt und in einem weiteren, zweiten Schritt mit einer Temperaturerniedrigung von 6°C in der Minute während etwa 170 Minuten wieder auf Umgebungstemperatur abgekühlt. Es liegt nun eine Keramikmembran vor, die gegenüber dem Grünkörper ein hartes, reines Keramikgefüge aufweist, wobei die Additive des Grünkörpermateriales verdampft sind. Nach diesem Sinterschritt ist die Membrane stark uneben und weist Verwerfungen auf von mehreren Millimetern bei einem Durchmesser von etwa 40 mm.

Die Membrane kann in diesem Zustand, wegen den starken Verwerfungen und Eigenspannungen im Material noch nicht verwendet werden. Die Membrane muss mit mindestens einem weiteren Schritt geglättet werden. Dies erfolgt dadurch, dass die Membrane einem weiteren Heizschritt im Ofen unterzogen wird. Hierbei werden die Membranen vorsichtig zwischen massive und sehr plane hartgesinterte Al₂O₃-Platten (auch "dead"-Al₂O₃, d.h. grosskörnige) gelegt, welche bei einem Membrandurchmesser von 40mm vorzugsweise ein Gewicht von einigen 10 bis einigen 100 Gramm, wie im Beispiel etwa 60 Gramm, aufweisen oder entsprechend beschwert sind. Die Temperatur wird während etwa 390 Minuten mit 4°C pro Minute langsam auf etwa 1570°C hochgefahren. Nach einer kurzen Verweilzeit von einigen Minuten, etwa 25 Minuten, auf dieser Temperatur wird die Temperatur wiederum langsam abgesenkt, während etwa 115 Minuten mit etwa 5°C pro Minute, bis 1000°C erreicht worden sind. Danach wird die Temperatur mit etwa 6°C pro Minute weiter abgesenkt, während etwa 166 Minuten, bis Umgebungstemperatur erreicht wird. Nach einem solchen Glättungsschritt erscheint die Membran nur noch mit einer sehr geringen Verwerfung von einigen zehntel Millimetern. Wichtig bei diesem Glättungsschritt ist, dass die Temperatur gegenüber dem ersten Sinterheizschritt weniger hoch ist, vorzugsweise bis maximal 100°C unter der Sintertemperatur liegt. Um gute Ergebnisse zu erzielen, wie sie für die geforderte Messzellenqualität notwendig sind, muss dieser Glättungsheizschritt mindestens zweimal durchgeführt werden. Aus wirtschaftlichen Gründen sollten die Glättungsheizschritte so durchgeführt werden, dass nicht mehr als zwei Glättungsschritte notwendig sind. Besonders gute Ergebnisse werden dadurch erzielt, dass zwischen den Glättungsheizschritten die Membran sorgfältig von der Platte abgelöst wird und in etwas versetzter Position wieder abgelegt wird. Sie kann mit Vorzug sogar umgedreht abgelegt werden. Die Verwendung eines Stapels von mehreren planen Platten mit dazwischenliegenden Membranen macht die Anordnung besonders wirtschaftlich.

Für die Funktionsfähigkeit von Messzellen der vorerwähnten Art, ist die Qualität der Membrane entscheidend. Das vorerwähnte Herstellungsverfahren ermöglicht die Herstellung von dünnen Membranen hoher Dichtheit bei sehr guter Planität. Die Einhaltung entsprechender Parameter beim Sintern und beim anschliessenden Glättungsschritt sind hierbei relevant. Beim Sintern müssen Maximaltemperaturen erreicht werden von 1300 bis 1800 °C, vorzugsweise von 1400 bis 1700 °C. Dieses Temperaturmaximum sollte zumindest kurz erreicht werden, aber maximal 180 Minuten lang in diesem Bereich gehalten werden. Die Aufheizgeschwindigkeit soll maximal 25 °C pro Minute betragen. Vorzugsweise wird das Aufheizen in zwei Schritte unterteilt. Nach Erreichen von 1000 bis 1300 °C soll das weitere Aufheizen bis auf Endtemperatur mit geringerer Geschwindigkeit erfolgen, mit maximal 15 °C pro Minute. Nach dem Erreichen bzw. Halten der vorerwähnten Maximaltemperatur wird die Membrane wieder abgekühlt, mit einer Geschwindigkeit von maximal 25 °C pro Minute. Bei einem zu raschen Aufheizen und/oder Abkühlen werden die Membranen stark wellig und porös. Längere Zeiten schaden nicht, sind aber nicht wirtschaftlich.

Beim Glätten müssen dieselben Bedingungen eingehalten werden wie beim Sintern, wobei die Glättungstemperatur die maximale Sintertemperatur nie überschreiten darf. Vorzugsweise bleibt diese bis maximal 100 °C unter der Sintertemperatur.

Es liegen nun Membranen vor, die wahlweise Dicken im Bereich von 10µm bis 250µm, vorzugsweise < 120µm aufweisen können. Mit dem vorliegenden Verfahren können Planitäten der Membranen erreicht werden, die besser als 10µm über die gesamte Fläche sind, vorzugsweise sogar besser als 5µm. Die Körner des Membranmateriales sind dabei im Mittel kleiner als 20µm, vorzugsweise kleiner als 10µm, wobei sogar solche, die kleiner als 5µm sind erzielt werden können. Dadurch kann auch die Forderung, dass über die Dicke mindestens zwei Körner vorhanden sein müssen, besser sogar mindestens fünf Körner, ohne weiteres erreicht werden. Somit können heliumdichte Membranen realisiert werden, welche für die Messzellenanforderung notwendig sind. Die Membran ist nun bereit für die Weiterverwendung im Messzellenaufbau.

Die Membran sowie eine plane Oberfläche des ersten Gehäusekörpers aus Al₂O₃ wird nun mit einem elektrisch leitenden Belag für die Ausbildung der Elektroden versehen. Dazu kann beispielsweise eine metallhaltige, beispielsweise eine goldhaltige Farbe verwendet werden, die beispielsweise aufgepinselt, aufgesprayt oder vorzugsweise aufgedruckt wird. Eine weitere Methode besteht darin, die elektrisch leitende Schicht mit Vakuumaufdampfen zu erzeugen, vorzugsweise mit Sputtern. Um die Schicht präzise und definiert erstellen zu können, ist es von Vorteil, wenn beispielsweise eine Goldschicht, die zuerst relativ dick, etwa 1µm, aufgebracht wird, anschliessend im inneren Bereich wieder abgedünnt wird, bis auf einige Nanometer Dicke, etwa 5 nm, mit einem Ätzverfahren, wie vorzugsweise einem Ionen- bzw. Sputterätzen. Auf diese Art entsteht ein dickerer Randbereich welcher, wenn beispielsweise gelötet wird, eine Diffusionssperre bildet. Ein praktisch einfach anwendbares und bevorzugtes Verfahren besteht darin, dass zuerst eine dünne Schicht von einigen nm über die ganze Fläche aufgebracht wird und danach am Rand eine dickere Schicht Gold mit Siebdruck (d.h. mit Kombinationsverfahren und verschiedenen Schichtdicken). Solchermassen behandelte Membranen, bzw. Gehäuse werden anschliessend getempert mit Temperaturen von einigen 100°C, vorzugsweise im Bereich von 650°C.

Das zweite Keramikgehäuse, welches messeitig angeordnet wird, besteht aus einer planen Keramikplatte, welche membranseitig eine flächige Ausnehmung aufweisen kann, um einen genügend grossen Messvakuumraum zu bilden. Der Anschlusstutzen wird an diesem Keramikgehäuse durch Schweissen, Kleben oder Löten, vorzugsweise mit einem Glaslot, so verbunden, dass die Anschlussöffnung mit dem zukünftigen Messvakuumraum kommunizieren kann.

Die Membrane wird im peripheren Bereich, wo die Dichtung erfolgt, beidseitig mit einer Glaspaste versehen, vorzugsweise mit einem Siebdruckverfahren. Nach dem Trocknen wird die Membrane mit der Glaspaste in einem Ofen bei einigen 100°C, vorzugsweise bei etwa 670°C, eingebrannt. Danach wird die Glasoberfläche beidseitig poliert, wobei vorzugsweise auch der zukünftige Elektrodenabstand definiert wird.

Das elektrodenseitige, obere Keramikgehäuse kann zusätzlich auf der Aussenseite mit Hilfe des bereits erwähnten Beschichtungsprozesses, mit einer elektrisch leitenden Schicht versehen werden, um eine Abschirmung zu bilden. Ausserdem werden auch hier die Anschlusstellen am Gehäuse angebracht. In einem weiteren Schritt werden die Bohrungen für die elektrische Durchführung für die Elektrodenanschlüsse metallisiert, vorzugsweise mit Silber.

In einer Testphase wird das erste Gehäuse mit der Elektrode und den Durchführungen, zusammen mit der aufgelegten Membran, auf Dichtigkeit und auf die Elektrodendistanz geprüft. Danach wird der untere Gehäuseteil aufgelegt und der ganze Aufbau gewichtsbelastet, um ebenfalls die Funktion und die Distanzen zu testen. Anschliessend erfolgt in einem Montagerahmen allenfalls zusätzlich das Aufsetzen des Getteranschlusses und unter Gewichtsbelastung von etwa 200 Gramm ein Einbrennen der Glasdichtungen bei einigen 100°C, vorzugsweise bei etwa 630°C, und anschliessend ein Test, ob die erforderlichen Abstände eingehalten werden. Allenfalls kann durch weitere Gewichtsbelastung oder -entlastung und einen weiteren Brennvorgang der Membranabstand korrigiert werden. Der Vorgang des Dichtens muss sehr sorgfältig erfolgen und wie bereits erwähnt sollten bei der Messzellenanordnung keine Spannungen auftreten. Alternativ kann anstelle von Glaslot oder anderen Abdichtungsmitteln auch eine direkte Verschweissung erfolgen, vorzugsweise eine Laserverschweissung.

Die Erfindung wird nun anhand von Figuren schematisch und beispielsweise beschrieben.

### Es zeigen:

Fig. 2 schematisch und im Querschnitt eine erfindungsgemässe kapazitive Vakuummesszelle.

Fig. 3 eine vergrösserte Darstellung und einen Ausschnitt aus der Messzelle nach Fig. 2.

Fig. 4 Ein Temperatur - Zeit Diagramm für den Sinterschritt der Membran.

Fig. 5 Ein Temperatur - Zeit Diagramm für einen Glättungsschritt der Membran.

Eine kapazitive Messzelle mit einer erfindungsgemässen Membrane aus Al₂O₃ mit im wesentlichen vollständig um die Membran symmetrisch angeordnetem Aufbau ist im Querschnitt in Fig. 2 dargestellt. Das erste Gehäuse (1) besteht aus einer Keramikplatte aus Al₂O₃ welches in einem Abstand von 2µm bis 50µm gegenüber der keramischen Membran (2) im Randbereich dichtend verbunden ist und einen Referenzvakuumraum (25) einschliesst. Der Abstand zwischen den beiden Flächen wird in der Regel direkt beim Montieren über das Dichtungsmaterial (3), welches zwischen dem Membranrand und dem Gehäuserand liegt, eingestellt. Auf diese Weise kann eine vollständig plane Gehäuseplatte (1) verwendet werden. Auf die gleiche Art und Weise wird in einem zweiten Gehäuse (4) auf der gegenüberliegenden Membranseite ein Messvakuumraum (26) ausgebildet, welcher über einen Anschluss-Stutzen (5) durch eine Öffnung im Gehäuse (4) für zu messende Medien erreichbar ist.

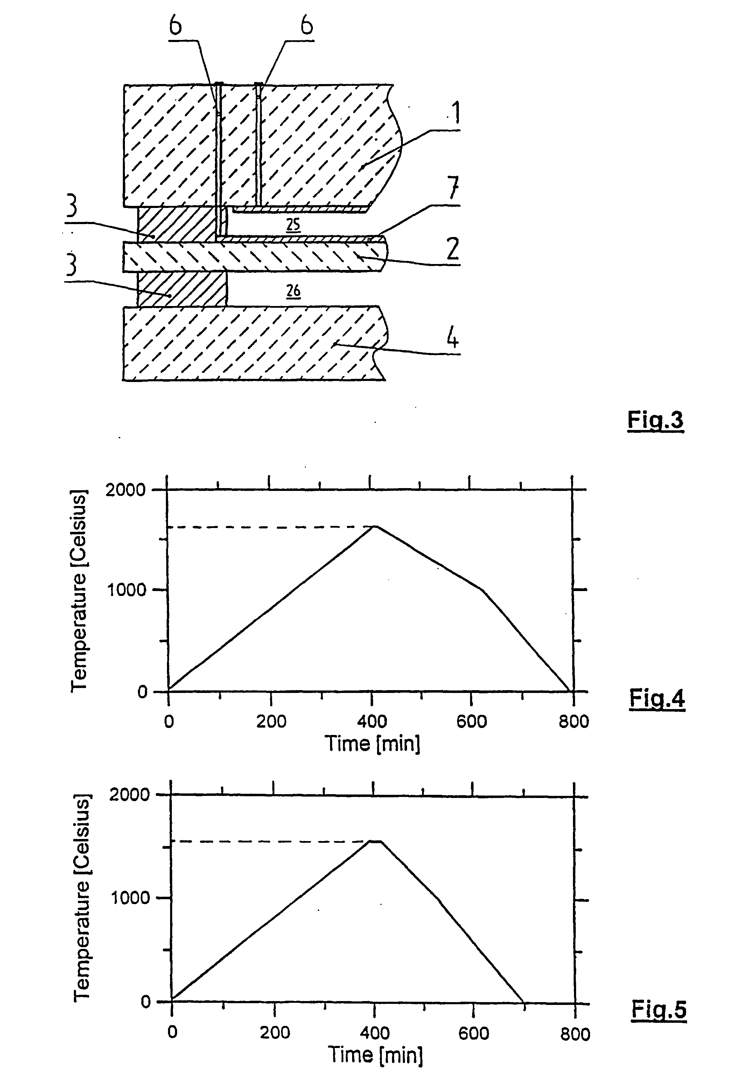

In Fig. 3 ist ein vergrösserter Ausschnitt des Randbereiches einer Messzelle im Querschnitt dargestellt. Die Dichtung (3) beidseitig der Membran (2) definiert wie erwähnt den Abstand der beiden Gehäuse (1 und 4). Diese Dichtung ist beispielsweise und bevorzugt ein Glaslot, welches einfach handhabbar ist und beispielsweise durch Siebdruck aufgebracht werden kann. In einer typischen Messzelle mit einem Aussendurchmesser von 38 mm und einem freien Membran-Innendurchmesser von 30 mm beträgt der Abstand (3) etwa 2 bis 50µm, vorzugsweise 12 bis 35µm. Hierbei ist beispielsweise das erste Gehäuse (1) 5 mm dick, das zweite Gehäuse (4) 3 mm dick. Das zweite Gehäuse (4) wird vorzugsweise im Innenbereich, wie in Fig. 1 dargestellt, mit einer ca. 0,5 mm tiefen Ausnehmung versehen, um den Messvakuumraum (26) zu vergrössern. Die Membran (2) und das Gehäuse (1) sind referenzvakuumraumseitig mit je einer elektrisch leitenden Schicht (7) beschichtet. Die beiden Schichten stehen miteinander elektrisch nicht in Verbindung. Die Schichten (7) können beispielsweise aufgemalt, aufgedruckt, aufgesprayt oder mit einem Vakuumverfahren aufgebracht werden. Vorzugsweise werden sie mit einem Vakuumverfahren, wie mit Bedampfen oder Sputtern aufgebracht. Besonders geeignet als Schichtmaterial ist Gold, welches beispielsweise mit 1µm Schichtdicke aufgedampft wird und hernach mittels Sputter Ätzen auf einige Nanometer, beispielsweise 5 nm abgedünnt wird. Die Schicht kann dadurch in der Dicke definiert und dünn genug, spannungsfrei eingestellt werden. Die elektrischen Anschlüsse der Membranen (7) erfolgen vorzugsweise mit vakuumdichten, elektrisch leitenden Durchführungen (6), vorzugsweise durch das Gehäuse (1), wo sie dann mit der Auswertelektronik verbunden werden können. Die Abpumpleitung, welche durch die erste Gehäuseplatte (1) führt und die Getteranordnung sind in Figur 3 nicht dargestellt.

Ein Beispiel eines optimierten Zeit- Temperaturprofils für den Sinterschritt der Membrane, ausgehend vom Grünkörper, ist in Figur 4 dargestellt. Beim Sintern ist darauf zu achten, dass das Membranmaterial nach dem Sintern Korngrössen aufweist, die im Mittel nicht grösser sind als 20µm, besser nicht grösser als 10µm, vorzugsweise kleiner als 5µm, um hohe Gasdichtheit bzw. Heliumdichtheit der dünnen Membran zu gewährleisten. Im Querschnitt, über die Dicke der Membrane sollten ausserdem mindestens 2 Körner, besser 5 Körner, vorhanden sein. Nach dem Sinterschritt ist die Membrane um mehrere mm gegenüber einer planen Fläche verworfen.

Die Membrane ist so noch nicht brauchbar und muss geglättet werde, das heisst es müssen Planitäten erreicht werden die von der idealen planen Fläche um nicht mehr als 10µm, besser um weniger als 5µm, abweichen. Dies wird dadurch erreicht, indem die Membrane, auf einer planen Fläche liegend vorsichtig bis zu ihrem Erweichen in einem Ofen erwärmt wird. Sie wird sich dann schon durch ihr Eigengewicht an die plane Unterlage anpassen. Um bessere Ergebnisse zu erreichen kann dieser Vorgang widerholt werden und zusätzlich die Membrane zwischen planen Platten mit leichtem Druck plan gedrückt werden. Besonders einfach erfolgt dies, wenn die Belastung der Membranen durch das Eigengewicht der Platten erfolgt, im Bereich von einigen 10 Gramm. Die Membranen sollten zwischen den Glättungsheizschritten von den planen Platten abgelöst und verdreht oder umgedreht wieder abgelegt werden. Zwei Glättungsschritte sind in der Regel ausreichend und sollten aus wirtschaftlichen Gründen angestrebt werden.

Ein Beispiel eines optimierten Zeit- Temperaturprofils für einen Glättungsschritt, ausgehend von der bereits gesinterten Membrane, ist in Figur 4 dargestellt. Hierbei erreicht die Membrane eine Maximaltemperatur von 1570 °C und bleibt unter derjenigen der Sintertemperatur von 1630 °C. Die Membrane wird weich und kann sich der formgebenden, insbesondere der planen Unterlage durch das Eigengewicht oder gewichtsbelastet anpassen.

## Patentansprüche

1. Membrane für eine Vakuummesszelle aus Al₂O₃, **dadurch gekennzeichnet, dass** die Membrane (2) eine Dicke aufweist im Bereich von 10µm bis 250µm, vorzugsweise von 10µm bis 120µm und dass im Querschnitt der Membran (2) über die Dicke des Membranmaterial mindestens 2 Körner aufweist.

2. Membrane nach Anspruch 1, **dadurch gekennzeichnet, dass** die mittlere Korngrösse des Membranmateriales ≤ 20 µm ist, vorzugsweise ≤ 10µm, insbesondere ≤ 5µm.

3. Membrane nach Anspruch 1 oder 2, **dadurch gekennzeichnet, dass** im Querschnitt der Membran (2) über die Dicke mindestens 5 Körner vorhanden sind.

4. Membrane nach einem der vorhergehenden Ansprüche, **dadurch gekennzeichnet, dass** die flächige Unebenheit der Membrane (2) nicht mehr als 10µm, vorzugsweise nicht mehr als 5µm beträgt.

5. Membrane nach einem der vorhergehenden Ansprüche, **dadurch gekennzeichnet, dass** die Reinheit des Al₂O₃ der Membrane (2) mindestens 94 % beträgt, vorzugsweise mindestens 99%.

6. Membrane nach einem der vorhergehenden Ansprüche, **dadurch gekennzeichnet, dass** der Durchmesser im Bereich von 5 bis 80mm liegt, vorzugsweise im Bereich von 5 bis 40mm und die Membrane vorzugsweise kreisrund ausgebildet ist.

7. Membrane nach einem der vorhergehenden Ansprüche, **dadurch gekennzeichnet, dass** mindestens eine der Oberflächen eine elektrisch leitende Beschichtung aufweist.

8. Verfahren zur Herstellung einer Membrane nach einem der Ansprüche 1 bis 7, **dadurch gekennzeichnet, dass** dieses folgende Schritte umfasst:
- Membranen werden aus einem Al₂O₃ Schlicker geformt,
- daraufhin erfolgt ein erster Heizschritt zur Sinterung der Membrane in einem Ofen mit darauf folgender Abkühlung,
- anschliessend wird in einem zweiten Heizschritt die Membrane nochmals erhitzt und hiermit geglättet und danach abgekühlt.

9. Verfahren nach Anspruch 8, **dadurch gekennzeichnet, dass** ein dritter Heizschritt zur Glättung erfolgt.

10. Verfahren nach Anspruch 8 oder 9, **dadurch gekennzeichnet, dass** die Temperatur des Glättungsheizschrittes die Erweichung der Membrane (2) bewirkt, wobei die Sintertemperatur nicht überschritten wird.

11. Verfahren nach einem der Ansprüche 8 bis 10, **dadurch gekennzeichnet, dass** die Sintertemperatur des ersten Heizschrittes gegenüber der Temperatur des oder der nachfolgenden Glättungsheizschritte grösser ist, vorzugsweise nicht grösser als 100°C.

12. Verfahren nach einem der Ansprüche 8 bis 11, **dadurch gekennzeichnet, dass** während dem oder den Glättungsheizschritten die Membrane auf einer planen Platte liegt, vorzugsweise zwischen planen Platten und vorzugsweise durch Zusammenpressen, wie insbesondere durch Gewichtsbelastung, geglättet werden.

13. Verfahren nach Anspruch 12, **dadurch gekennzeichnet, dass** die Membran zwischen zwei Glättungsheizschritten von den Platten abgelöst und in versetzter Position wieder abgelegt werden.

14. Verfahren nach Anspruch 13, **dadurch gekennzeichnet, dass** zum Glätten mehrere Membranen (2), stapelartig, übereinander zwischen planen Platten temperaturbehandelt werden.

15. Verfahren nach einem der Ansprüche 12 bis 14, **dadurch gekennzeichnet, dass** das Plattenmaterial im wesentlichen den gleichen Temperaturkoeffizienten wie das Membranmaterial aufweist, insbesondere aus Al₂O₃ besteht, wobei dieses vorzugsweise hartgesintert ist und eine höhere Erweichungstemperatur aufweist als die Membrane.

16. Verfahren nach einem der vorhergehenden Ansprüche 8 bis 15, **dadurch gekennzeichnet, dass** die Membranform aus dem Al₂O₃ Schlicker gegossen oder gepresst wird, vorzugsweise aus einem auf einer Trägerfolie aufgebrachten bandförmigen Al₂O₃ Grünkörper herausgeschnitten und anschliessend von der Folie abgezogen wird.

17. Verwendung der Membrane nach einem der vorhergehenden Ansprüche in einer kapazitiven Vakuummesszelle, insbesondere für Drücke kleiner 1000 mbar, vorzugsweise kleiner 1 mbar, bei einer Auflösung von besser 1%, vorzugsweise besser 0,3%.

## Claims

1. Membrane for a vacuum cell of Al₂O₃,
**characterised in that** the membrane (2) has a thickness in the region of 10 µm to 250 µm, preferably 10 µm to 120 µm, and that in the cross section of the membrane (2), over the thickness the membrane material has at least two grains.

2. Membrane in accordance with claim 1,
**characterised in that** the mean grain size of the membrane material is ≤ 20 µm, preferably ≤ 10 µm, in particular ≤ 5 µm.

3. Membrane in accordance with claim 1 or 2,
**characterised in that** in the cross section of the membrane (2), at least 5 grains are present over the thickness.

4. Membrane in accordance with one of the preceding claims,
**characterised in that** the planar unevenness of the membrane (2) is not more than 10 µm, preferably not more than 5 µm.

5. Membrane in accordance with one of the preceding claims,
**characterised in that** the purity of the Al₂O₃ of the membrane (2) is at least 94%, preferably at least 99%.

6. Membrane in accordance with one of the preceding claims,
**characterised in that** the diameter is in the region of 5 to 80 mm, preferably in the range of 5 to 40 mm, and the membrane is preferably designed to be circular.

7. Membrane in accordance with one of the preceding claims,
**characterised in that** at least one of the surfaces has an electrically conductive coating.

8. Method for producing a membrane in accordance with one of the claims 1 to 7,
**characterised in that** this comprises the following steps:
- membranes are formed from an Al₂O₃ slurry,
- there then follows a first heating stage for sintering the membrane in a kiln, with subsequent cooling,
- subsequently in a second heating stage, the membrane is heated up again and thereby smoothed, and then cooled.

9. Method in accordance with claim 8,
**characterised in that** a third heating stage takes place for the purpose of smoothing.

10. Method in accordance with claim 8 or 9,
**characterised in that** the temperature of the smoothing heating stage brings about the softening of the membrane (2), wherein the sintering temperature is not exceeded.

11. Method in accordance with one of the claims 8 to 10,
**characterised in that** compared with the temperature of the subsequent smoothing heating stage(s), the sintering temperature of the first heating stage is greater, preferably not greater than 100°C.

12. Method in accordance with one of the claims 8 to 11,
**characterised in that** during the smoothing heating stage(s), the membrane lies on a flat plate, preferably between two flat plates, and are preferably smoothed through pressing together, as for example in particular through weight loading.

13. Method in accordance with claim 12,
**characterised in that** the membrane is removed from the plates between two heating stages, and is laid down again in an offset position.

14. Method in accordance with claim 13,
**characterised in that** for the purpose of smoothing, several membranes (2) are temperature-treated in a stack, one above another, between flat plates.

15. Method in accordance with one of the claims 12 to 14,
**characterised in that** the plate material essentially has the same temperature coefficients as the membrane material, in particular that it comprises Al₂O₃, wherein this is preferably hard-sintered and has a higher softening temperature than the membrane.

16. Method in accordance with one of the preceding claims 8 to 15,
**characterised in that** the membrane shape is cast or pressed from the Al₂O₃ slurry, preferably cut out from a strip-form Al₂O₃ raw body applied to a carrier foil and subsequently pulled off the foil.

17. Use of the membrane in accordance with one of the preceding claims in a capacitive vacuum cell, in particular for pressures of less than 1000 mbar, preferably less than 1 mbar, with a resolution of better than 1%, preferably better than 0.3%.

## Revendications

1. Membrane pour cellule de mesure de vide en Al₂O₃, **caractérisée en ce que** la membrane (2) présente une épaisseur dans une gamme comprise entre 10 µm et 250 µm, et de préférence entre 10 µm et 120 µm, et **en ce que** la matière de la membrane comporte au moins 2 grains sur l'épaisseur en coupe transversale de la membrane (2).

2. Membrane selon la revendication 1, **caractérisée en ce que** la granulométrie moyenne de la matière de la membrane est inférieure ou égale à 20 µm, de préférence inférieure ou égale à 10 µm et plus particulièrement à 5 µm.

3. Membrane selon la revendication 1 ou 2, **caractérisée en ce que** l'on prévoit au moins 5 grains sur l'épaisseur en coupe transversale de la membrane (2).

4. Membrane selon l'une quelconque des revendications précédentes, **caractérisée en ce que** les inégalités superficielles de la membrane (2) ne dépassent pas 10 µm, et de préférence 5 µm.

5. Membrane selon l'une quelconque des revendications précédentes, **caractérisée en ce que** l'alumine Al₂O₃ de la membrane (2) présente une pureté d'au moins 94%, et de préférence d'au moins 99%.

6. Membrane selon l'une quelconque des revendications précédentes, **caractérisée par** un diamètre compris entre 5 et 80 mm, et de préférence entre 5 et 40 mm, et en ce que la membrane est de préférence de forme circulaire.

7. Membrane selon l'une quelconque des revendications précédentes, **caractérisée en ce qu'**au moins l'une de ses surfaces comporte un revêtement électriquement conducteur.

8. Procédé de fabrication d'une membrane selon l'une quelconque des revendications 1 à 7, **caractérisé en ce qu'**il comporte les étapes suivantes :
- on met en forme des membranes à partir d'une barbotine de Al₂O₃ ;
- puis on réalise une première étape de chauffage pour le frittage de la membrane dans un four suivie d'un refroidissement ;
- et enfin, dans une deuxième étape de chauffage, on chauffe à nouveau la membrane pour assurer un lissage, puis on la refroidit.

9. Procédé selon la revendication 8, **caractérisé en ce que** l'on réalise une troisième étape de chauffage de lissage.

10. Procédé selon la revendication 8 ou 9, **caractérisé en ce que** la température de frittage de la première étape de chauffage entraîne un ramollissement de la membrane (2), la température de frittage n'étant pas dépassée.

11. Procédé selon l'une quelconque des revendications 8 à 10, **caractérisé en ce que** la température de frittage de la première étape de chauffage est supérieure à la température de l'étape ou des étapes suivantes de chauffage de lissage, de préférence pas supérieure à 100°C.

12. Procédé selon l'une quelconque des revendications 8 à 11, **caractérisé en ce que**, pendant la ou les étapes de chauffage de lissage, la membrane repose sur une plaque plane, de préférence entre des plaques planes, et, est, de préférence, lissée par compression, comme, en particulier par effet de masse.

13. Procédé selon la revendication 12, **caractérisé en ce que** la membrane (2) est détachée des plaques entre deux étapes de chauffage de lissage et est redéposée en position décalée.

14. Procédé selon la revendication 13, **caractérisé en ce que**, pour le lissage, on réalise un traitement thermique de plusieurs membranes (2) qui sont empilées les unes sur les autres entre des plaques planes.

15. Procédé selon l'une quelconque des revendications 12 à 14, **caractérisé en ce que** la matière des plaques a, pour l'essentiel, le même coefficient de température que la matière de la membrane et est constituée, en particulier, de Al₂O₃, cette dernière étant, de préférence, frittée à froid et ayant une température de ramollissement plus grande que celle de la membrane.

16. Procédé selon l'une quelconque des revendications 8 à 15, **caractérisé en ce que** la forme de la membrane est coulée ou comprimée à partir de la barbotine de Al₂O₃ et est, de préférence, découpée à partir d'un corps de base en Al₂O₃, sous forme de bande et déposé sur une feuille porteuse, et ôtée ensuite de la feuille.

17. Utilisation de la membrane selon l'une quelconque des revendications précédentes dans une cellule de mesure sous vide à capacité, en particulier pour des pressions inférieures à 1000 mbar, et de préférence inférieures à 1 mbar, pour une résolution supérieure à 1%, de préférence supérieure à 0,3%.
